(19) Europäisches Patentamt
European Patent Office
Office européen des brevets

(11) EP 2 090 601 B1

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(51) Int Cl.:
***C08G 18/12*** *(2006.01)* ***C08G 18/28*** *(2006.01)*
***C08G 18/48*** *(2006.01)* ***C08G 18/76*** *(2006.01)*
***C09J 175/00*** *(2006.01)*

(21) Anmeldenummer: **08164148.2**

(22) Anmeldetag: **11.09.2008**

# (54) Feuchtigkeitsreaktive Klebstoffzusammensetzungen mit sehr geringer Temperaturabhängigkeit des Schubmoduls

Humidity reactive adhesive compositions with very low temperature dependency of shear modulus

Compositions de colle réactive à l'humidité à module de poussée peu dépendant de la température

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.10.2007 CH 15452007**
**11.09.2007 EP 07116117**

(43) Veröffentlichungstag der Anmeldung:
**19.08.2009 Patentblatt 2009/34**

(73) Patentinhaber: **Sika Technology AG**
**6340 Baar (CH)**

(72) Erfinder:
- **Konstanzer, Martin**
  **8048, Zürich (CH)**
- **Burckhardt, Urs**
  **8049, Zürich (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**EP-A- 0 469 751** **EP-A- 0 527 568**
**EP-A- 1 770 107** **EP-A- 1 975 188**
**EP-A- 1 975 189** **EP-A- 2 017 260**
**EP-A- 2 062 926** **EP-A- 2 072 550**
**WO-A-99/16619** **WO-A-03/059978**
**WO-A-2005/037885** **DE-A1- 3 133 769**
**JP-A- 8 302 960** **JP-A- 10 139 849**
**US-A- 3 426 097**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung betrifft das Gebiet der feuchtigkeitsreaktiven Klebstoffe, insbesondere der feuchtigkeitsreaktiven einkomponentigen Polyurethan-Scheibenklebstoffe.

### Stand der Technik

Feuchtigkeitsreaktive Klebstoffe sind schon lange im Gebrauch. Insbesondere feuchtigkeitsreaktive einkomponentige Polyurethanklebstoffe werden in industriellen Prozessen, wie im Fahrzeugbau, breit eingesetzt. Eine klassische Anwendung finden sie als Scheibenklebstoffe beim Einglasen von Fahrzeugen, d.h. beim Einkleben von Scheiben in die Fahrzeug-Karosserie.

Diese bekannten einkomponentigen Polyurethanklebstoffe weisen eine sehr markante Temperaturabhängigkeit des Schubmodules auf. Besonders markant ist der Abfall des Schubmoduls zwischen -20 °C und 23°C. Der Klebstoff-Formulierer ist in seiner Formulierfreiheit vor allem durch den Wert des Tieftemperaturmoduls (-20°C) des Klebstoffs nach oben begrenzt, um bei kalten Temperaturen einen Substratbruch zu verhindern. Im Verglasen ist das kritische Substrat Glas. Der kritische Wert des Schubmoduls liegt demzufolge für einen Scheibenklebstoff bei -20°C bei etwa 6 MPa. Durch die starke Temperaturabhängigkeit bedingt sind jedoch derartige Klebstoffe bei hohen Temperaturen (bei 23°C, insbesondere bei 80°C) sehr tiefmodulig, was aber nachteilig für eine mechanische Beanspruchung des Klebverbundes bei höheren Temperaturen ist. Die bekannten Polyurethanklebstoffe weisen eine starke Temperaturabhängigkeit des Schubmoduls auf. Insbesondere fällt der Schubmodul zwischen -20 °C und 23 °C markant ab. Dies führt dazu, dass solche als Scheibenklebstoffe eingesetzte Polyurethanklebstoffe im Bereich von 23 °C bis 80 °C Schubmodule aufweisen, welche deutlich unter 6 MPa liegen, typischerweise 3 MPa und tiefer.

### Darstellung der Erfindung

Aufgabe der vorliegenden Erfindung ist es daher, Klebstoffe zur Verfügung zu stellen, welche eine möglichst geringe Temperaturabhängigkeit des Schubmoduls aufweisen.

Überraschenderweise hat sich gezeigt, dass eine feuchtigkeitsreaktive Klebstoffzusammensetzung wie sie hier beschreiben sind, eine sehr kleine Temperaturabhängigkeit des Schubmoduls aufweist. Damit sind Verklebungen ermöglicht, welche über einen breiten Temperaturbereich sehr ähnliche Schubmodule aufweisen, und somit einfacher berechenbar sind. Es ist nun zudem möglich, Klebstoffe zu formulieren, welche bei Raumtemperatur und/oder bei 80°C sehr hohe Schubmodule aufweisen und trotzdem bei -20°C lediglich ein Schubmodul aufweisen, welches noch kein Risiko eines Substratbruches in sich birgt. Derartige Klebstoffe können sich nun auch bei diesen Temperaturen Schubmodulwerte aufweisen, welche nahe am Substratbruchwert liegen. Diese Möglichkeit erlaubt es nun, völlig neue Wege in der Gestaltung von Verklebungen zu beschreiten, welche bisher verschlossen waren.

Insbesondere ist es nun möglich, die maximale Torsionssteifigkeit der Karosserie über die eingeklebte Scheibe zu erzielen, sodass der Schubmodul des Scheibenklebstoffs über den ganzen Temperaturbereich von -20 °C bis 80 °C möglichst nahe an 6 MPa liegt und der Schubmodul eine möglichst geringe Temparaturabhängigkeit zeigt.

Besonders bevorzugte Ausführungsformen der Erfindung sind Gegenstand der abhängigen Ansprüche.

### Wege zur Ausführung der Erfindung

Die vorliegende Erfindung betrifft die Verwendung eines Dialdimines der Formel (I) zur Reduktion der Temperaturabhängigkeit des Schubmoduls gemäss DIN 54 451 von feuchtigkeitsreaktiven Polyurethanklebstoffen

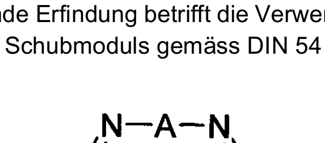

(I)

wobei A für einen zweiwertigen aliphatischen, cycloaliphatischen oder arylaliphatischen Kohlenwasserstoffrest mit 2 bis 15 C-Atomen steht, und Y für den Rest eines Aldehyds nach Entfernung einer O=CH-Gruppe steht.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "cycloaliphatisches primäres Diamin" bezeichnet hier und im Folgenden ein Diamin, welches zwei primäre Aminogruppen aufweist, die an einen Kohlenwasserstoffrest gebunden sind, welcher cycloaliphatisch ist oder cycloaliphatische Anteile aufweist.

Der Begriff "primäre Aminogruppe" bezeichnet im vorliegenden Dokument eine $NH_2$-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Als "Raumtemperatur" wird 23°C bezeichnet.

Als "Offenzeit" wird in diesem Dokument die Zeit bezeichnet, während der die Zusammensetzung verarbeitet werden kann, nachdem die Isocyanatgruppen des Polyisocyanats mit Wasser in Kontakt gekommen sind.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen längeren Zeitraum lagerstabil ist, sich also in ihren Anwendungs- oder Gebrauchseigenschaften durch die Lagerung nicht oder nur unwesentlich verändert, und welche nach der Applikation durch die Einwirkung von Feuchtigkeit und / oder Wärme aushärtet.

Ein "Klebstoff", bzw. eine "Klebstoffzusammensetzung", weist in diesem Dokument nach 7 Tagen Lagerung bei Raumtemperatur und 50% relativer Luftfeuchtigkeit, ein Schubmodul bei 23°C, gemessen nach DIN 54 451, von mehr als 1 MPa auf, und grenzt sich somit von einem ein "Dichtstoff", bzw. einer "Dichtstoffzusammensetzung", welcher oder welche ein Schubmodul bei 23°C, gemessen nach DIN 54 451 solches von maximal 1 MPa aufweist.

Gestrichelte Linien in Formeln in diesem Dokument stellen jeweils die Bindung zwischen einem Substituenten und dem zugehörigen Molekülrest dar.

Besonders bevorzugte Dialdimine der Formel (I) sind solche, deren α-Kohlenstoff zur Imino-Gruppe keine Wasserstoffatome aufweisen, d.h. insbesondere Dialdimine, bei denen der Rest Y die Formel (II a) oder (II b) aufweist,

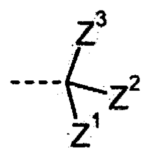

(II a)

$---Z^4$ (II b)

wobei

$Z^1$ und $Z^2$ entweder

unabhängig voneinander jeweils für einen einwertigen Kohlenwasserstoffrest mit 1 bis 12 C-Atomen stehen,

oder

zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen; und

$Z^3$ entweder

für eine verzweigte oder unverzweigte Alkyl-, Cycloalkyl-, Alkylen- oder Cycloalkylengruppe steht,

oder für eine substituierte oder unsubstituierte Aryl- oder Arylalkylgruppe steht,

oder für einen Rest der Formel $O-R^2$ oder

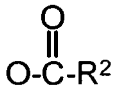 oder 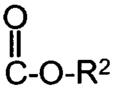

oder

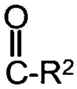

steht, wobei $R^2$

für eine Aryl-, Arylalkyl-, Cycloalkyl- oder Alkylgruppe steht und jeweils substituiert oder unsubstituiert ist, insbesondere für eine Aryl-, Arylalkyl-, Cycloalkyl- oder Alkylgruppe mit 1 bis 32 C-Atomen, welche, gegebenenfalls Ethersauerstoffatome enthält, steht,

oder für einen Rest der Formel (VI) steht,

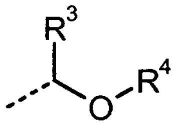 (VI)

wobei

$R^3$ für ein Wasserstoffatom oder für eine Alkyl-, Cycloalkyl- oder Arylalkylgruppe, insbesondere mit 1 bis 12 C-Atomen, bevorzugt für ein Wasserstoffatom, steht, und

$R^4$ entweder

für einen Kohlenwasserstoffrest mit 1 bis 30 C-Atomen, der gegebenenfalls Ethersauerstoffatome enthält, steht,

oder für einen Rest

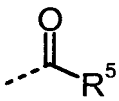

steht, wobei $R^5$ für ein Wasserstoffatom oder für einen Kohlenwasserstoffrest mit 1 bis 30, insbesondere 11 bis 30, C-Atomen steht;

und wobei

$Z^4$ entweder

für eine substituierte oder unsubstituierte Aryl- oder Heteroaryl-Gruppe, welche eine Ringgrösse von 5 bis 8, bevorzugt 6, Atomen aufweist, steht,

oder für

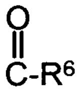

steht, wobei $R^6$

für ein Wasserstoffatom oder für eine Alkoxygruppe steht,

oder für eine substituierte oder unsubstituierte Alkenyl- oder Arylalkenylgruppe mit mindestens 6 C-Atomen steht.

Ein Dialdimin (I) lässt sich aus mindestens einem Diamin der Formel (III) und mindestens einem Aldehyd der Formel (IV), insbesondere mindestens einem Aldehyd der Formel (IV a) oder (IV b), herstellen.

$H_2N\text{-}A\text{-}NH_2$ (III)

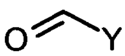 (IV)

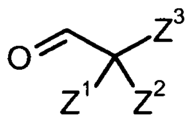

(IV a)

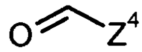

(IV b)

Die Umsetzung zwischen mindestens einem Diamin der Formel (III) und mindestens einem Aldehyd der Formel (IV) oder (IV a) oder (IV b) erfolgt in einer Kondensationsreaktion unter Abspaltung von Wasser. Solche Kondensationsreaktionen sind bestens bekannt und beschrieben, beispielsweise in Houben-Weyl, "Methoden der organischen Chemie", Vol. XI/2, Seite 73ff. Der Aldehyd wird hierbei in Bezug auf die primären Aminogruppen des Amins stöchiometrisch oder in stöchiometrischem Überschuss eingesetzt. Üblicherweise werden solche Kondensationsreaktionen in Anwesenheit eines Lösemittels durchgeführt, mittels welchem das bei der Reaktion entstehende Wasser azeotrop entfernt wird. Zur Herstellung der Dialdimine der Formel (I) wird jedoch ein Herstellverfahren ohne Verwendung von Lösemitteln bevorzugt, wobei das bei der Kondensation gebildete Wasser direkt mittels Anlegen von Vakuum aus der Reaktionsmischung entfernt wird.

Als Aldehyd geeignet sind zum einen Aldehyde der Formel (IV) wie beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd und Diphenylacetaldehyd.

Als Aldehyd geeignet sind zum anderen Aldehyde der Formel (IV b), wie beispielsweise aromatische Aldehyde, wie Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7-und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.

Insbesondere geeignete Aldehyde sind die sogenannten tertiären Aldehyde, das heisst Aldehyde der Formel (IV a), welche in $\alpha$-Stellung zur Carbonylgruppe kein Wasserstoffatom aufweisen.

Geeignete Aldehyde der Formel (IV a) sind beispielsweise Pivalaldehyd (= 2,2-Dimethyl-propanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Weiterhin geeignete Aldehyde der Formel (IV a) sind Aldehyde der Formel (V).

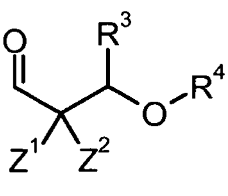

(V)

In Formel (V) weisen $Z^1$, $Z^2$, $R^3$ und $R^4$ die bereits genannten Bedeutungen auf.

Bevorzugt stehen in Formel (V) $Z^1$ und $Z^2$ für je eine Methylgruppe und $R^3$ für ein Wasserstoffatom.

Ein besonders geeigneter Aldehyd der Formel (V) ist in einer Ausführungsform ein Aldehyd ALD1 der Formel (V a),

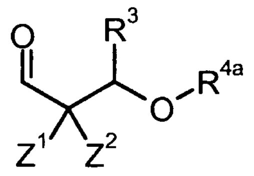

(V a)

wobei $R^{4a}$ für einen Kohlenwasserstoffrest mit 1 bis 30 C-Atomen, insbesondere 11 bis 30 C-Atomen, der gegebenenfalls Ethersauerstoffatome enthält, steht. In Formel (V a) weisen $Z^1$, $Z^2$ und $R^3$ die bereits genannten Bedeutungen auf.

Die Aldehyde ALD1 der Formel (V a) stellen Ether von aliphatischen, cycloaliphatischen oder arylaliphatischen 2,2-disubstituierten 3-Hydroxyaldehyden mit Alkoholen oder Phenolen der Formel $R^{4a}$-OH dar, beispielsweise Fettalkoholen oder Phenolen. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären cycloaliphatischen oder sekundären arylaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd. Beispiele geeigneter 2,2-disubstituierter 3-Hydroxyaldehyde sind 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal.

Als Beispiele solcher Aldehyde ALD1 der Formel (V a) genannt sind 2,2-Dimethyl-3-phenoxy-propanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

Ein besonders geeigneter Aldehyd der Formel (V) ist in einer weiteren Ausführungsform ein Aldehyd ALD2 der Formel (V b),

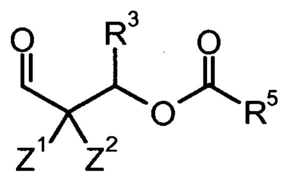

(V b)

In Formel (V b) weisen $Z^1$, $Z^2$, $R^3$ und $R^5$ die bereits genannten Bedeutungen auf.

$R^5$ steht für ein Wasserstoffatom oder für einen Kohlenwasserstoffrest mit 1 bis 30, insbesondere 11 bis 30, C-Atomen.

Die Aldehyde **ALD2** der Formel (V b) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxalde-hyd, 2-Hydroxymethyl-2-methyl-3-phenyl-propanal, 3-Hydroxy-2-methyl-2-phenyl-propanal und 3-Hydroxy-2,2-diphenyl-propanal, mit Carbonsäuren wie Ameisensäure, Essigsäure, Propionsäure, Buttersäure, Isobuttersäure, Valeriansäure und Capronsäure.

Als Beispiele solcher Aldehyde **ALD2** der Formel (V b) genannt sind 2,2-Dimethyl-3-formyloxy-propanal, 3-Acetoxy-2,2-dimethylpropanal, 2,2-Dimethyl-3-propionoxypropanal, 3-Butyroxy-2,2-dimethyl-propanal, 2,2-Dimethyl-3-isobutyroxy-propanal, 2,2-Dimethyl-3-pentoyloxy-propanal, 2,2-Dimethyl-3-hexoyloxy-propanal, 3-Benzoyloxy-2,2-dimethylpropanal, 3-Cyclohexanoyloxy-2,2-dimethylpropanal, 2,2-Dimethyl-3-(2-ethylhexyloxy)-propanal, 2,2-Dimethyl-3-lauroyloxy-propanal, 2,2-Dimethyl-3-myristoyloxy-propanal, 2,2-Dimethyl-3-palmitoyloxy-propanal, 2,2-Dimethyl-3-stearoyloxy-propanal, sowie analoge Ester anderer 2,2-disubstituierter 3-Hydroxyaldehyde.

Bevorzugte Aldehyde sind die Aldehyde der Formel (IV a) und der Formel (IV b).

Insbesondere bevorzugt sind die Aldehyde der Formel (V).

Am meisten bevorzugt sind die Aldehyde **ALD2** der Formel (V b), insbesondere 2,2-Dimethyl-3-lauroyloxy-propanal.

Beispiele für geeignete primäre Diamine der Formel (III) sind primäre aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan, Bis-(4-amino-3-methylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0$^{2,6}$]decan, 1,4-Diamino-2,2,6-trimethylcyclohexan(TMCDA) sowie 1,3- und 1,4-Xylylendiamin.

Als Diamine der Formel (III) bevorzugt sind symmetrische Diamine. Als "symmetrische Diamine" werden im vorliegenden Dokument Diamine der Formel (III) bezeichnet, in welchen die beiden primären Aminogruppen symmetrieäquivalent sind, d.h. durch eine Symmetrieoperation, beispielsweise eine Drehung oder eine Spiegelung, ineinander übergeführt werden können.

Bevorzugte symmetrische Diamine der Formel (III) sind ausgewählt aus der Gruppe bestehend aus Ethylendiamin, 1,3-Propandiamin, 1,4-Butandiamin, 1,5-Pentandiamin, 1,6-Hexandiamin, 1,8-Octandiamin, 1,10-Decandiamin, 1,12-Dodecandiamin, 1,3- und 1,4-Diaminocyclohexan, Bis-(4-aminocyclohexyl)-methan, 1,3- und 1,4-Bis-(aminomethyl)cyclohexan sowie 1,3- und 1,4-Xylylendiamin.

Besonders bevorzugte symmetrische Diamine der Formel (III) sind ausgewählt aus der Gruppe bestehend aus Ethylendiamin, 1,6-Hexandiamin, 1,12-Dodecandiamin, 1,4-Diaminocyclohexan, Bis-(4-aminocyclohexyl)-methan, 1,3-Bis-(aminomethyl)cyclohexan sowie 1,3-Xylylendiamin.

Als symmetrisches Diamin der Formel (III) am meisten bevorzugt ist 1,6-Hexandiamin.

Der Rest A im Dialdimin der Formel (I) entspricht dem Diamin der Formel (III) nach Entfernung der zwei Aminogruppen.

Die Klebstoffzusammensetzung enthält weiterhin mindestens ein bei Raumtemperatur flüssiges, Isocyanatgruppen aufweisendes Polyurethanpolymer **P1.**

Ein geeignetes Isocyanatgruppen aufweisendes Polyurethanpolymer **P1** ist erhältlich durch die Umsetzung von mindestens einem Polyol mit mindestens einem Polyisocyanat.

Als Polyole für die Herstellung eines Polyurethanpolymers P1 können beispielsweise die folgenden Polyole oder Mischungen davon eingesetzt werden:

- Polyetherpolyole, auch Polyoxyalkylenpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls wie beispielsweise Wasser, Ammoniak, 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.

Besonders geeignet sind Polyoxypropylendiole und -triole mit einem Ungesättigtheitsgrad tiefer als 0.02 mEq/g und einem Molekulargewicht im Bereich von 1000 bis 30'000 g/mol, sowie Polyoxypropylendiole und -triole mit einem Molekulargewicht von 400 bis 8'000 g/mol. Unter 'Molekular-gewicht' oder 'Molgewicht' versteht man im vorliegenden Dokument stets das Molekulargewichtsmittel $M_n$. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim® von Bayer vertrieben.

Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.

- Polycarbonatpolyole, wie sie durch Umsetzung beispielsweise der oben genannten - zum Aufbau der Polyesterpolyole eingesetzten - Alkohole mit Dialkylcarbonaten, wie Dimethylcarbonat, Diarylcarbonaten, wie Diphenylcarbonat, oder Phosgen zugänglich sind.

Besonders geeignet sind Polycarbonatdiole.

- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen-oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylnitril, Vinylchlorid, Vinylacetat, Vinylalkohol, Isobutylen und Isopren, beispielsweise polyhydroxyfunktionelle Acrylnitril/Butadien-Copolymere, welche zum Beispiel aus carboxylterminierten Acrylnitril/Butadien-Copolymeren (kommerziell erhältlich unter dem Namen Hycar® CTBN von Noveon) und Epoxiden oder Aminoalkoholen herstellbar sind; sowie hydrierte polyhydroxyfunktionelle Polymere oder Copolymere von Dienen.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole wie beispielsweise Dimerfettsäurediole, 1,1,1-Trimethylolethan, 1,1,1-Trimethylolpropan, Glycerin, Pentaerythrit, niedrigmolekulare Alkoxylierungsprodukte der vorgenannten zwei- und mehrwertigen Alkohole, sowie Mischungen der vorgenannten Alkohole bei der Herstellung eines Polyurethanpolymers **P1** mitverwendet werden.

Als Polyisocyanate für die Herstellung eines Polyurethanpolymers **P1** können aliphatische, cycloaliphatische oder aromatische Polyisocyanate, insbesondere Diisocyanate, verwendet werden.

Insbesondere geeignet sind die folgenden:

- 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder $H_6$ TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder $H_{12}$MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin.
- 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI).
- Oligomere und Polymere der vorgenannten monomeren Diisocyanate.
- Beliebige Mischungen der vorgenannten Polyisocyanate.

Bevorzugt sind monomere Diisocyanate, insbesondere MDI, TDI, HDI und IPDI.

Die Herstellung eines Polyurethanpolymers **P1** erfolgt in bekannter Art und Weise direkt aus den Polyisocyanaten und den Polyolen, oder durch schrittweise Adduktionsverfahren, wie sie auch als Kettenverlängerungsreaktionen bekannt sind.

In einer bevorzugten Ausführungsform wird das Polyurethanpolymer P1 über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 10, insbesondere 1.5 bis 5.

Das Polyurethanpolymer **P1** weist ein Molekulargewicht von vorzugsweise über 500 g/mol, insbesondere ein solches zwischen 1000 und 30'000 g/mol, auf.

Weiterhin weist das Polyurethanpolymer **P1** bevorzugt eine mittlere NCO-Funktionalität im Bereich von 1.8 bis 3 auf.

Als besonders geeignet hat sich gezeigt, wenn die feuchtigkeitsreaktive Klebstoffzusammensetzung mehrere Polyurethanpolymere **P1** aufweist, wobei vorzugsweise eines auf einem Polyol mit einem Molekulargewicht unter 2000 g/mol basiert. Als besonders vorteilhaft hat sich die Kombination eines auf Polyetherpolyol basierenden Polyurethanpolymers **P1,** und eines auf Polycarbonatpolyol basierenden Polyurethanpolymers **P1**erwiesen.

Andererseits hat sich gezeigt, dass es besonders vorteilhaft ist, mindestens ein bei Raumtemperatur flüssiges, Isocyanatgruppen aufweisendes Polyurethanpolymer **P1** mit mindestens einem bei Raumtemperatur festen Isocyanatgruppen aufweisenden Polyurethanpolymer **P2** zu kombinieren. Bei Raumtemperatur feste, Isocyanatgruppen aufweisenden Polyurethanpolymere **P2** können aus den Polyolen und Polyisocyanaten hergestellt werden, welche bereits bei der Herstellung der Polyurethanpolymeren **P1** beschrieben worden sind. Besonders bevorzugt als Polyurethanpolymer **P2** sind bei Raumtemperatur feste Polyurethanpolymere, welche Isocyanatgruppen aufweisen und aus Polyesterpolyolen und/oder Polycarbonatpolyolen hergestellt werden.

Es hat sich gezeigt, dass es besonderes vorteilhaft ist, wenn die feuchtigkeitsreaktive Klebstoffzusammensetzung anorganische und organische Füllstoffe enthält. Als Beispiel für derartige Füllstoffe sind gemahlene oder gefällte Calciumcarbonate, welche gegebenenfalls mit Fettsäuren, insbesondere Stearaten, beschichtet sind, Baryt ($BaSO_4$, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln.

Meist bevorzugte Füllstoffe sind Russe, calcinierte Kaoline und Kreiden sowie deren Mischungen untereinander.

Der Gesamtmenge an Füllstoffen liegt vorzugsweise zwischen 25 und 55, insbesondere 30 - 45, Gew.-%, bezogen auf die feuchtigkeitsreaktive Klebstoffzusammensetzung. Meist bevorzugt enthält die feuchtigkeitsreaktive Klebstoffzusammensetzung 10 - 35, insbesondere 10 - 30, Gew.-% Russ.

Die feuchtigkeitsreaktive Klebstoffzusammensetzung enthält gegebenenfalls weitere Bestandteile, insbesondere in Polyurethanzusammensetzungen üblicherweise eingesetzte Hilfs- und Zusatzstoffe, wie beispielsweise die folgenden:

- Weichmacher, beispielsweise Carbonsäureester wie Phthalate, beispielsweise Dioctylphthalat, Diisononylphthalat oder Diisodecylphthalat, Adipate, beispielsweise Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-$\alpha$-Olefine (APAO);

- Lösemittel;
- Fasern, beispielsweise aus Polyethylen;
- Pigmente, beispielsweise Titandioxid oder Eisenoxide;
- Katalysatoren, welche die Hydrolyse der Aldiminogruppen beschleunigen, insbesondere Säuren, beispielsweise organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, beispielsweise Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer wie beispielsweise Verdickungsmittel oder Thixotropiermittel, zum Beispiel Harnstoffverbindungen, Polyamidwachse, Bentonite oder pyrogene Kieselsäuren;
- Reaktivverdünner und Vernetzer, beispielsweise monomere Diisocyanate wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethan-diisocyanat, 1,3- und 1,4-Tetramethylxylylendiisocyanat, sowie Oligomere und Derivate dieser Polyisocyanate, insbesondere in Form von Isocyanuraten, Carbodiimiden, Uretoniminen, Biureten, Allophanaten oder Iminooxadiazindionen, Addukte monomerer Polyisocyanate mit kurzkettigen Polyolen, sowie Adipinsäuredihydrazid und andere Dihydrazide, sowie Polyisocyanate mit blockierten aromatischen Isocyanatgruppen, wie beispielsweise die Desmocap®-Typen 11, 12 und XP 2540 (alle von Bayer) und die Trixene®-Typen BI 7641, BI 7642, BI 7770, BI 7771, BI 7772, BI 7774 und BI 7779 (alle von Baxenden);
- blockierte Amine, beispielsweise in Form von Ketiminen, Oxazolidinen, Enaminen oder anderen Aldiminen;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in $\alpha$-Stellung zur Silangruppe eine funktionelle Gruppe aufweisen;
- Haftvermittler, insbesondere Organoalkoxysilane ("Silane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz solcher weiteren Bestandteile darauf zu achten, dass diese die Lagerstabilität der Zusammensetzung nicht stark beeinträchtigen. Das heisst, dass diese Bestandteile während der Lagerung die zur Vernetzung führenden Reaktionen, wie Hydrolyse der Aldiminogruppen oder Vernetzung der Isocyanatgruppen, nicht in signifikantem Ausmass auslösen dürfen. Insbesondere bedeutet dies, dass all diese Bestandteile kein oder höchstens Spuren von Wasser enthalten sollten. Es kann sinnvoll sein, gewisse Bestandteile vor dem Einmischen in die Zusammensetzung chemisch oder physikalisch zu trocknen.

Bevorzugt enthält die feuchtigkeitsreaktive Klebstoffzusammensetzung mindestens einen Katalysator. Der Katalysator ist insbesondere eine der genannten Säuren, wie Benzoesäure oder Salicylsäure, oder eine der genannten Metallverbindungen, oder eines der genannten tertiären Amine. Es kann durchaus vorteilhaft sein, unterschiedliche Katalysatoren, bzw. unterschiedliche Katalysatorenarten, einzusetzen.

Die beschriebene feuchtigkeitsreaktive Klebstoffzusammensetzung wird unter Ausschluss von Feuchtigkeit hergestellt und aufbewahrt. Sie ist lagerstabil, d.h. sie kann unter Ausschluss von Feuchtigkeit in einer geeigneten Verpackung oder Anordnung, wie beispielsweise einem Fass, einem Eimer, einem Beutel, einer Kartusche oder einer Flasche über einen Zeitraum von beispielsweise mehreren Monaten aufbewahrt werden, ohne dass sie sich in ihren Anwendungseigenschaften oder in ihren Eigenschaften nach der Aushärtung in einem für ihren Gebrauch relevanten Ausmass verändert. Je nach Konsistenz der Zusammensetzung ist es üblich, die Lagerstabilität über die Messung der Viskosität zu ermitteln.

Die Aldiminogruppen des Aldimins der Formel (I) haben die Eigenschaft, bei Kontakt mit Feuchtigkeit zu hydrolysieren. Die dabei formal frei werdenden primären Aminogruppen reagieren dabei mit den in der beschriebenen feuchtigkeitshärtenden Klebstoffzusammensetzung vorhandenen Isocyanatgruppen zu Harnstoffgruppen, und es wird der entsprechende Aldehyd der Formel Y-CHO freigesetzt. Im Verhältnis zu den Aldiminogruppen überschüssige Isocyanatgruppen reagieren direkt mit Feuchtigkeit und bilden ebenfalls Harnstoffgruppen. Gegebenenfalls vorhandene

blockierte Isocyanatgruppen reagieren im Allgemeinen unter Freisetzung des Blockierungsmittels ebenfalls zu Harnstoffgruppen, wobei diese Reaktion gegebenenfalls erst unter Einwirkung von Hitze abläuft. Als Ergebnis dieser Reaktionen härtet die Zusammensetzung zu einem festen Material aus; dieser Prozess wird auch als Vernetzung bezeichnet. Die Reaktion der Isocyanatgruppen mit dem hydrolysierenden Aldimin muss dabei nicht notwendigerweise über freie Aminogruppen erfolgen. Selbstverständlich sind auch Reaktionen mit Zwischenstufen der Hydrolysereaktion möglich. Beispielsweise ist es denkbar, dass eine hydrolysierende Aldiminogruppe in der Form eines Halbaminals direkt mit einer Isocyanatgruppe reagiert.

Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Besprühen, oder es kann der Zusammensetzung bei der Applikation eine Wasser enthaltende Komponente zugesetzt werden.

Die beschriebene feuchtigkeitsreaktive Klebstoffzusammensetzung härtet bei Kontakt mit Feuchtigkeit im Allgemeinen ohne die Bildung von Blasen aus. Die Aushärtungsgeschwindigkeit lässt sich über die Art und Menge eines oder mehrerer gegebenenfalls vorhandener Katalysatoren, über die bei der Aushärtung herrschende Temperatur sowie über die Luftfeuchtigkeit bzw. die Menge zugesetzten Wassers beeinflussen.

Als Ergebnis dieser Reaktionen mit Wasser, insbesondere in der Form von Luftfeuchtigkeit, vernetzt die beschriebene feuchtigkeitsreaktive Klebstoffzusammensetzung und härtet schliesslich zu einem festen Material aus.

Der Anteil des Dialdimines der Formel (I) in der feuchtigkeitsreaktiven Zusammensetzung ist insbesondere derart bemessen, dass das Verhältnis der Anzahl Aldimino-Gruppen zur Anzahl der NCO-Gruppen in der Zusammensetzung 0.5 - < 1, bevorzugt mindestens 0.6 - 0.8, meist bevorzugt 0.65 - 0.75, beträgt.

Es hat sich gezeigt, dass das Vorhandensein des Dialdimins der Formel (I) wesentlich dafür verantwortlich ist, dass eine Temperaturunabhängigkeit, bzw. eine Reduktion der Temperaturabhängigkeit, des Schubmodul erfolgt.

Dank der vorliegenden Erfindung ist es ermöglicht, dass der Schubmodul des Klebstoffs bei erhöhten Temperaturen (z. B. bei Raumtemperatur oder bei 80°C) stark erhöht werden kann. Die maximale Erhöhung orientiert sich jedoch in der Praxis daran, dass der Modul des Klebstoffs im erwarteten Temperaturverwendungsbereich denjenigen der zu verklebenden Materialien annähert, aber nicht überschreitet.

Grundsätzlich können verschiedenste Substrate **S1** und **S2** mittels der beschriebenen feuchtigkeitsreaktiven Klebstoffzusammensetzung verklebt werden, wobei die Substrate **S1** und **S2** gleich oder verschieden voneinander sein können. Beispielsweise sind geeignete Substrate **S1** und/oder **S2** anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Leder, Stoffe, Papier, Holz, mit Harz gebundene Holzwerkstoffe, Harz-Texil-Compositewerkstoffe, Kunststoffe wie Polyvinylchlorid (Hart- und Weich-PVC), Acrylonitril-Butadien-Styrol-Copolymere (ABS), SMC (Sheet Moulding Composites), Polycarbonat (PC), Polyamid (PA), Polyester, Polymethylmethacrylat (PMMA), Epoxidharze, Polyurethane (PUR), Polyoxymethylen (POM), Polyolefine (PO), insbesondere mittels Plasma, Corona oder Flammen oberflächenbehandeltes Polyethylen (PE) oder Polypropylen (PP), Ethylen/Propylen-Copolymere (EPM) und Ethylen/Propylen-Dien-Terpolymere (EPDM); beschichtete Substrate wie pulverbeschichtete Metalle oder Legierungen; sowie Farben und Lacke, insbesondere Automobillacke.

Die beschriebene feuchtigkeitsreaktive Klebstoffzusammensetzung kann als elastischer Klebstoff für alle Arten von Verklebungen eingesetzt werden. Insbesondere eignet sie sich als Klebstoff für industrielle Anwendungen. Die geringe Temperaturabhängigkeit der beschriebenen feuchtigkeitsreaktiven Klebstoffzusammensetzung erlaubt es, dass damit ausgeführte Verklebungen einfacher berechenbar sind. So können Verklebungen mit Klebstoffen ausgeführt werden, welche bei Raumtemperatur einen Schubmodul aufweisen, der nahe am Substratbruchwert liegt, ohne dass befürchtet werden muss, dass bei bei -20 °C Substratbruch auftritt. Diese Möglichkeit erlaubt es nun, völlig neue Wege in der Gestaltung von Verklebungen zu beschreiten.

Die beschriebene feuchtigkeitsreaktive Klebstoffzusammensetzung kann jedoch insbesondere gut verwendet werden bei der Verklebung von Scheiben im Transportmittelbau (d.h. als Scheibenklebstoff), insbesondere im Automobilbau. Infolge der Kombination der zu verklebenden Materialien, d.h. Glasscheibe und Metall, bzw. lackiertem Metall, ist es von grossem Vorteil, dass der Schubmodul des Klebstoffs sich im gesamten Temperaturbereich, d.h. von -20°C bis 80 °C, an 6 MPa (gemessen nach DIN 54 451) annähert, aber diesen Wert nicht überschreitet.

Es bietet sich der Vorteil, dass der Schubmodul der feuchtigkeitsreaktiven Klebstoffzusammensetzung im gesamten für den Gebrauch eines Fahrzeugs in der Praxis relevanten Temperaturbereich, insbesondere zwischen -20 °C und 80 °C, eine geringe Temperaturabhängigkeit aufweist. Damit wird es möglich, Scheibenklebstoffe zu formulieren, welche bei Raumtemperatur und/oder bei 80 °C sehr hohe Schubmodule, über 3 oder sogar über 4 MPa (gemessen nach DIN 54 451), aufweisen und bei -20 °C trotzdem lediglich ein Schubmodul aufweisen, welches noch immer unter 6 MPa (gemessen nach DIN 54 451) liegt und damit kein Risiko eines Substratbruches in sich birgt. Dies erlaubt es, über die eingeklebte Scheibe eine maximale Torsionssteifigkeit der Karosserie zu erzielen, was im Fahrzeugbau, insbesondere im Automobilbau, von grosser Bedeutung ist.

Das Einglasen von Scheiben in Transportmittel erfolgt in einer an und für sich bekannten Art und Weise. In

einer üblichen Variante wird der Klebstoff auf die Scheibe, typischerweise auf die im Randbereich der Scheibe vorhandene Glaskeramik, aufgetragen und anschliessend innerhalb der Offenzeit des Klebstoffs mit der Karosserie des Transportmittels, insbesondere eines Metallflansches, welcher typischerweise lackiert ist, gefügt. In einer weiteren Variante wird der Klebstoff auf die Karosserie des Transportmittels, insbesondere auf einen Metallflansch, welcher typischerweise lackiert ist, aufgetragen und dann innerhalb der Offenzeit des Klebstoffs mit der Scheibe, typischerweise auf die im Randbereich der Scheibe vorhandene Glaskeramik, gefügt.

Die beschriebene feuchtigkeitsreaktive Klebstoffzusammensetzung weist nach 7 Tagen Lagerung bei Raumtemperatur und 50% relativer Luftfeuchtigkeit, bei 80 °C vorzugsweise ein Schubmodul, gemessen nach DIN 54 451, von mehr als 1 MPa, insbesondere zwischen 1 und 5 MPa, auf

Die beschriebene feuchtigkeitsreaktive Klebstoffzusammensetzung weist nach 7 Tagen Lagerung bei Raumtemperatur und 50% relativer Luftfeuchtigkeit bei -20°C vorzugsweise ein Schubmodul, gemessen nach DIN 54 451, von weniger als 6 MPa, vorzugsweise zwischen 3 und 6 MPa, bevorzugt zwischen 4 und 6 MPa, auf.

Die beschriebene feuchtigkeitsreaktive Klebstoffzusammensetzung weist nach 7 Tagen Lagerung bei Raumtemperatur und 50% relativer Luftfeuchtigkeit bei 23°C vorzugsweise ein Schubmodul, gemessen nach DIN 54 451, von mehr als 3 MPa, insbesondere zwischen 3 und 6 MPa, vorzugsweise zwischen 4 und 6 MPa, mehr bevorzug zwischen 3.5 und 5.5 MPa, auf.

Die beschriebene feuchtigkeitsreaktive Klebstoffzusammensetzung weist nach 7 Tagen Lagerung bei Raumtemperatur und 50% relativer Luftfeuchtigkeit bei 80 °C vorzugsweise ein Schubmodul, gemessen nach DIN 54 451 von mehr als 2, insbesondere von mehr als 3 MPa, bevorzugt zwischen 3 und 5 MPa, auf.

Die Klebstoffzusammensetzungen weisen zudem nach 7 Tagen Lagerung bei Raumtemperatur und 50% relativer Luftfeuchtigkeit ein Verhältnis des bei -20°C gemessenen Schubmoduls zum bei 23°C gemessenen Schubmodul kleiner als 1.7, insbesondere kleiner als 1.5, bevorzugt kleiner als 1.4, auf, wobei die Schubmodule bei den angegebenen Temperaturen nach DIN 54 451 gemessen wurden.

Die Substrate können bei Bedarf vor dem Applizieren der beschriebenen feuchtigkeitsreaktiven Klebstoffzusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Aus der Verwendung der Klebstoffzusammensetzung resultiert ein verklebter Artikel, welcher durch ein Verkleben von zwei Substraten **S1** und **S2** durch eine vorgängig beschriebene feuchtigkeitsreaktive Klebstoffzusammensetzung und der Härtung der Klebstoffzusammensetzung durch Feuchtigkeit erhalten wird.

Insbesondere ist der Artikel derart, dass das Substrat **S1** eine Scheibe, insbesondere eine Glasscheibe, und das Substrat **S2** ein Metall, insbesondere ein lackiertes Metall, ist.

Es zeigt sich, dass die beschriebene feuchtigkeitsreaktive Klebstoffzusammensetzung blasenfrei aushärtet, gute mechanische Werte erzielt und über eine schnelle Durchhärtung verfügt. Weiterhin lassen sich gute Haftung auf diversen Untergründen, insbesondere Glas, Keramik, Metall und Lack erzielen.

**Beispiele**

Beschreibung der Messmethoden

Der **Amingehalt** der hergestellten Dialdimine, das heisst der Gehalt an blockierten Aminogruppen in Form von Aldiminogruppen, wurde titrimetrisch bestimmt (mit 0.1N $HClO_4$ in Eisessig, gegen Kristallviolett) und ist stets angegeben in mmol N/g.

a) Herstellung von Dialdiminen

**Dialdimin *A-1***

In einem Rundkolben wurden unter Stickstoffatmosphäre 50.9 g (0.18 mol) 2,2-Dimethyl-3-lauroyloxy-propanal vorgelegt. Unter kräftigem Rühren wurden aus einem beheizten Eintropftrichter 10.0 g (0.17 mol N) 1,6-Hexandiamin (BASF; Amingehalt 17.04 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 57.7 g eines klaren, blassgelben Öls mit einem Amingehalt von 2.94 mmol N/g.

**Dialdimin *A-2***

In einem Rundkolben wurden unter Stickstoffatmosphäre 87.0 g (0.31 mol) 2,2-Dimethyl-3-lauroyloxy-propanal vorgelegt. Unter kräftigem Rühren wurden aus einem Eintropftrichter 20.0 g (0.29 mol N) 1,3-Xylylendiamin (Mitsubishi

Gas Chemical; Amingehalt 14.56 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 101.0 g eines klaren, blassgelben Öls mit einem Amingehalt von 2.85 mmol N/g.

b) Herstellung von einkomponentigen elastische Scheibenklebstoffen

**Beispiele *1* und 2 und Vergleichsbeispiel *Ref.*:**

Für jedes Beispiel wurden die jeweiligen Bestandteile gemäss Tabelle 1 in den angegebenen Gewichtsteilen in einem Vakuummischer unter Feuchtigkeitsausschluss zu einer homogenen Paste verarbeitet, diese unverzüglich in eine innenlackierte Aluminium-Kartusche abgefüllt und die Kartusche luftdicht verschlossen.

Das Polyurethanpolymer ***PUP-1*** wurde wie folgt hergestellt:

1300 g Polyoxypropylen-Diol (Acclaim® 4200 N, Bayer; OH-Zahl 28.5 mg KOH/g), 2600 g Polyoxypropylenpolyoxyethylen-Triol (Caradol® MD34-02, Shell; OH-Zahl 35.0 mg KOH/g), 600 g 4,4'-Methylendiphenyldiisocyanat (MDI; Desmodur® 44 MC L, Bayer) und 500 g Diisodecylphthalat (DIDP; Palatinol® Z, BASF) wurden bei 80 °C zu einem NCO-terminierten Polyurethanpolymeren mit einem Gehalt an freien Isocyanat-Gruppen von 2.01 Gewichts-% umgesetzt.

Das *Verdickungsmittel* wurde wie folgt hergestellt:

In einem Vakuummischer wurden 3000 g Diisodecylphthalat (DIDP; Palatinol® Z, BASF) und 480 g 4,4'-Methylendiphenyldiisocyanat (MDI; Desmodur® 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

Das Verhältnis zwischen den Isocyanatgruppen und den Aldimino-gruppen in den Beispielen 1 und 2 beträgt 1.00 / 0.75.

Die so erhaltenen einkomponentigen elastischen Klebstoffe wurden auf Applikationseigenschaften, Hautbildungszeit und mechanische Eigenschaften nach der Aushärtung geprüft.

Schubmodule wurden nach DIN 54 451 nach 7 Tagen Lagerung bei Raumtemperatur und 50% relativer Luftfeuchtigkeit bei der in Tabelle 1 angegebenen Temperatur gemessen. Die hierfür verwendeten Aluminiumsubstrate wurden vor der Verklebung mit Sika® Primer 204, erhältlich bei Sika Schweiz AG, vorbehandelt.

Als Mass für die **Offenzeit** wurde die Hautbildungszeit (Zeit bis zur Klebefreiheit, "tack-free time") herangezogen. Zur Messung der Hautbildungszeit wurde der Klebstoff auf 40 °C aufgewärmt und in einer Schichtdicke von ca. 2 mm auf Pappkarton aufgetragen und bei 23 °C und 50% relativer Luftfeuchtigkeit die Zeit bestimmt, die es dauerte, bis beim leichten Antippen der Oberfläche der Zusammensetzung mittels einer Pipette aus LDPE erstmals keine Rückstände auf der Pipette mehr zurückblieben.

Tabelle 1: Zusammensetzung von einkomponentigen elastischen Scheibenklebstoffen der Beispiele ***1*** und ***2*** sowie des Vergleichsbeispiels ***Ref.***

| | ***Ref.*** | *1* | *2* |
|---|---|---|---|
| Polyurethanpolymer ***PUP-1*** | 44.0 | 44.0 | 44.0 |
| Dialdimin | -<br>0.0 | ***A-2,***<br>8.0 | ***A-1,***<br>7.8 |
| Flüssiges MDI | 1.3 | 1.3 | 1.3 |
| Weichmacher[a] | 9.5 | 1.5 | 1.6 |
| Russ | 15.0 | 15.0 | 15.0 |
| *Verdickungsmittel* | 10.0 | 10.0 | 10.0 |
| Kaolin | 20.0 | 20.0 | 20.0 |
| Säurekatalysator[b] | - | 0.2 | 0.2 |
| Zinnkatalysator[c] | 0.2 | - | - |
| | | | |
| Hautbildungszeit [min] | 25 | 20-25 | 12-14 |
| Blasenbildung | wenig | keine | keine |
| Schubmodul -20°C | 5.9 MPa | 5.3 MPa | 4.4 MPa |

(fortgesetzt)

| | *Ref.* | *1* | *2* |
|---|---|---|---|
| Schubmodul 23°C | 3.2 MPa | 3.6 MPa | 3.7 MPa |
| Schubmodul 80°C | 2.5 MPa | 1.5 MPa | 3.4 MPa |
| Schubmodul -20°C / Schubmodul 23°C | 1.84 | 1.47 | 1.19 |

[a] Diisodecylphthalat (DIDP; Palatinol® Z, BASF). [b] Salicylsäure (5 Gew.-% in Dioctyladipat).[c] 25 Gew.-% Dibutylzinndilaurat in Diisodecylphthalat.

Die Zusammensetzungen **1** und **2** zeigten ausgezeichnete Haftung auf Glas (vorbehandelt durch Sika® Primer-206 G+P) und Lackblechen (vorbehandelt durch Sika®Primer-209 C).

**Patentansprüche**

1. Verwendung eines Dialdimines der Formel (I) zur Reduktion der Temperaturabhängigkeit des Schubmoduls gemäss DIN 54 451 von feuchtigkeitsreaktiven Polyurethanklebstoffen

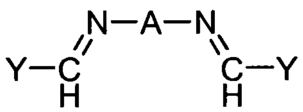

(I)

wobei A für einen zweiwertigen aliphatischen, cycloaliphatischen oder arylaliphatischen Kohlenwasserstoffrest mit 2 bis 15 C-Atomen steht, und Y für den Rest eines Aldehyds nach Entfernung einer O=CH-Gruppe steht.

2. Verwendung gemäss Anspruch 1, **dadurch gekennzeichnet, dass** A für ein Diamin der Formel (III) nach Entfernung der zwei Aminogruppen steht,

$H_2N\text{-}A\text{-}NH_2$ (III)

und, dass dieses Diamin der Formel (III) ausgewählt ist aus der Gruppe bestehend aus Ethylendiamin, 1,3-Propandiamin, 1,4-Butandiamin, 1,5-Pentandiamin, 1,6-Hexandiamin, 1,8-Octandiamin, 1,10-Decandiamin, 1,12-Dodecandiamin, 1,3- und 1,4-Diaminocyclohexan, Bis-(4-amino-cyclohexyl)-methan, 1,3- und 1,4-Bis-(aminomethyl)cyclohexan sowie 1,3- und 1,4-Xylylendiamin.

3. Verwendung gemäss Anspruch 2, **dadurch gekennzeichnet, dass** das Diamin der Formel (III) 1,6-Hexandiamin ist.

4. Verwendung gemäss einem der vorhergehenden Ansprüche, **dadurch gekennzeichnet, dass** der Rest Y die Formel (II a) oder (II b) aufweist

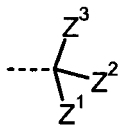

(II a)

$---Z^4$ (II b)

wobei

$Z^1$ und $Z^2$ entweder unabhängig voneinander jeweils für einen einwertigen Kohlenwasserstoffrest mit 1 bis 12 C-Atomen stehen,

oder

zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen; und
$Z^3$ entweder
für eine verzweigte oder unverzweigte Alkyl-, Cycloalkyl-, Alkylen- oder Cycloalkylengruppe steht,
oder für eine substituierte oder unsubstituierte Aryl- oder Arylalkylgruppe steht,
oder für einen Rest der Formel O-$R^2$ oder

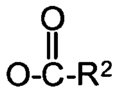 oder 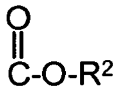

oder

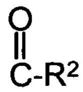

steht, wobei $R^2$ für eine Aryl-, Arylalkyl- , Cycloalkyl- oder Alkylgruppe steht und jeweils substituiert oder unsubstituiert ist, insbesondere für eine Aryl-, Arylalkyl- , Cycloalkyl- oder Alkylgruppe mit 1 bis 32 C-Atomen steht, welche, gegebenenfalls Ethersauerstoffatome enthält,
oder für einen Rest der Formel (VI) steht,

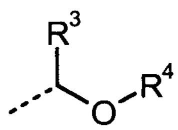 (VI)

wobei
$R^3$ für ein Wasserstoffatom oder für eine Alkyl- , Cycloalkyl- oder Arylalkylgruppe, insbesondere mit 1 bis 12 C-Atomen, bevorzugt für ein Wasserstoffatom, steht, und
$R^4$ entweder
für einen Kohlenwasserstoffrest mit 1 bis 30 C-Atomen, der gegebenenfalls Ethersauerstoffatome enthält, steht,
oder für einen Rest

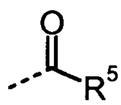

steht, wobei $R^5$ für ein Wasserstoffatom oder für einen Kohlenwasserstoffrest mit 1 bis 30, insbesondere 11 bis 30, C-Atomen steht;
$Z^4$ entweder
für eine substituierte oder unsubstituierte Aryl- oder Heteroaryl-Gruppe, welche eine Ringgrösse von 5 bis 8, bevorzugt 6, Atomen aufweist, steht,
oder für

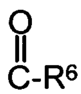

steht, wobei $R^6$
für ein Wasserstoffatom oder für eine Alkoxygruppe steht,
oder für eine substituierte oder unsubstituierte Alkenyl- oder Arylalkenylgruppe mit mindestens 6 C-Atomen steht.

5. Verwendung gemäss einem der vorhergehenden Ansprüche, **dadurch gekennzeichnet, dass** der Aldehyd, aus dem sich der Rest Y ableitet, die Formel (V a) aufweist

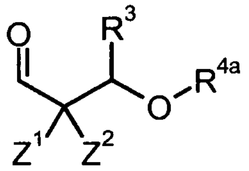

(V a)

wobei
$Z^1$ und $Z^2$ entweder
unabhängig voneinander jeweils für einen einwertigen Kohlenwasserstoffrest mit 1 bis 12 C-Atomen stehen,
oder
zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
$R^3$ für ein Wasserstoffatom oder für eine Alkyl-, Cycloalkyl- oder Arylalkylgruppe, insbesondere mit 1 bis 12 C-Atomen, bevorzugt für ein Wasserstoffatom, steht; und
$R^{4a}$ für einen Kohlenwasserstoffrest mit 1 bis 30 C-Atomen, insbesondere 11 bis 30 C-Atomen, der gegebenenfalls Ethersauerstoffatome enthält, steht.

6. Verwendung gemäss einem der Ansprüche 1 bis 4, **dadurch gekennzeichnet, dass** der Aldehyd, aus dem sich der Rest Y ableitet, die Formel (V b) aufweist

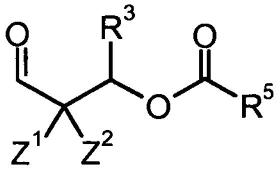

(V b)

wobei
$Z^1$ und $Z^2$ entweder
unabhängig voneinander jeweils für einen einwertigen Kohlenwasserstoffrest mit 1 bis 12 C-Atomen stehen,
oder
zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
$R^3$ für ein Wasserstoffatom oder für eine Alkyl-, Cycloalkyl- oder Arylalkyl-gruppe, insbesondere mit 1 bis 12 C-Atomen, bevorzugt für ein Wasserstoffatom, steht; und
$R^5$ für ein Wasserstoffatom oder für einen Kohlenwasserstoffrest mit 1 bis 30, insbesondere 11 bis 30, C-Atomen steht.

7. Verwendung gemäss einem der vorhergehenden Ansprüche, **dadurch gekennzeichnet, dass** der feuchtigkeitsreaktive Polyurethanklebstoff mindestens ein bei Raumtemperatur flüssiges, Isocyanatgruppen aufweisendes Polyurethanpolymer **P1** umfasst.

8. Verwendung gemäss Anspruch 7, **dadurch gekennzeichnet, dass** die Klebstoffzusammensetzung mehrere Polyurethanpolymere **P1** umfasst, wobei vorzugsweise eines davon auf einem Polyol mit einem Molekulargewicht unter 2000 g/mol basiert.

9. Verwendung gemäss Anspruch 8, **dadurch gekennzeichnet, dass** die Klebstoffzusammensetzung ein auf Polyetherpolyol basierendes Polyurethanpolymer **P1** und ein auf Polycarbonatpolyol basierendes Polyurethanpolymer **P1** aufweist.

10. Verwendung gemäss einem der Ansprüche 7 bis 9, **dadurch gekennzeichnet, dass** die Klebstoffzusammensetzung zusätzlich mindestens ein bei Raumtemperatur festes, Isocyanatgruppen aufweisenden Polyurethanpolymer **P2** aufweist.

11. Verwendung gemäss Anspruch 10, **dadurch gekennzeichnet, dass** das bei Raumtemperatur feste Polyurethanpolymer **P2** aus Polyesterpolyolen und/oder Polycarbonatpolyolen hergestellt wird.

12. Verwendung gemäss einem der Ansprüche 7 bis 11, **dadurch gekennzeichnet, dass** der Anteil des Dialdimines der Formel (I) in der Zusammensetzung so gewählt ist, dass das Verhältnis der Anzahl Aldimino-Gruppen zur Anzahl der NCO-Gruppen in der Zusammensetzung 0.5 - < 1, bevorzugt mindestens 0.6 - 0.8, meist bevorzugt 0.65 - 0.75, beträgt.

13. Verwendung gemäss einem der vorhergehenden Ansprüche, **dadurch gekennzeichnet, dass** die Klebstoffzusammensetzung nach 7 Tagen Lagerung bei Raumtemperatur und 50% relativer Luftfeuchtigkeit ein Verhältnis des bei -20°C gemessenen Schubmoduls zum bei 23°C gemessenen Schubmodul kleiner als 1.7, insbesondere kleiner als 1.5, bevorzugt kleiner als 1.4, aufweist, wobei die Schubmodule bei den angegebenen Temperaturen nach DIN 54 451 gemessen wurden.

14. Verwendung gemäss Anspruch 13, **dadurch gekennzeichnet**, die Klebstoffzusammensetzung nach 7 Tagen Lagerung bei Raumtemperatur und 50% relativer Luftfeuchtigkeit, bei 80 °C ein Schubmodul, gemessen nach DIN 54 451, von mehr als 1 MPa, insbesondere zwischen 1 und 5 MPa, aufweist.

15. Verwendung gemäss Anspruch 13 oder 14, **dadurch gekennzeichnet, dass**, **dadurch gekennzeichnet, dass** die Klebstoffzusammensetzung nach 7 Tagen Lagerung bei Raumtemperatur und 50% relativer Luftfeuchtigkeit bei -20°C ein Schubmodul, gemessen nach DIN 54 451, von weniger als 6 MPa, vorzugsweise zwischen 3 und 6 MPa, bevorzugt zwischen 4 und 6 MPa, aufweist.

16. Verwendung gemäss einem der vorhergehenden Ansprüche, **dadurch gekennzeichnet, dass** die Klebstoffzusammensetzung nach 7 Tagen Lagerung bei Raumtemperatur und 50% relativer Luftfeuchtigkeit bei 23°C ein Schubmodul, gemessen nach DIN 54 451, von mehr als 3 MPa, insbesondere zwischen 3 und 6 MPa, vorzugsweise zwischen 4 und 6 MPa, mehr bevorzugt zwischen 3.5 und 5.5 MPa, aufweist.

17. Verwendung gemäss einem der vorhergehenden Ansprüche, **dadurch gekennzeichnet, dass** die Klebstoffzusammensetzung nach 7 Tagen Lagerung bei Raumtemperatur und 50% relativer Luftfeuchtigkeit bei 80 °C ein Schubmodul, gemessen nach DIN 54 451 von mehr als 2, insbesondere von mehr als 3 MPa, bevorzugt zwischen 3 und 5 MPa, aufweist.

## Claims

1. Use of a dialdimine of the formula (I) for reducing the temperature dependence of the shear modulus according to DIN 54 451 of moisture-reactive polyurethane adhesives

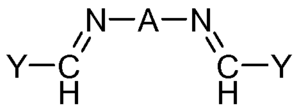

(I)

where A stands for a divalent aliphatic, cycloaliphatic or arylaliphatic hydrocarbon radical having 2 to 15 C atoms, and Y stands for the radical of an aldehyde following removal of an O=CH group.

2. Use according to claim 1, **characterized in that** A stands for a diamine of the formula (III) following removal of the two amino groups,

$$H_2N\text{-}A\text{-}NH_2 \qquad (III)$$

and that this diamine of the formula (III) is selected from the group consisting of ethylenediamine, 1,3-propanediamine, 1,4-butanediamine, 1,5-pentanediamine, 1,6-hexanediamine, 1,8-octanediamine, 1,10-decanediamine, 1,12-dodecanediamine, 1,3- and 1,4-diaminocyclohexane, bis(4-aminocyclohexyl)methane, 1,3- and 1,4-bis(aminomethyl)-cyclohexane and also 1,3- and 1,4-xylylenediamine.

3. Use according to Claim 2, **characterized in that** the diamine of the formula (III) is 1,6-hexanediamine.

4. Use according to any one of the preceding claims, **characterized in that** the radical Y has the formula (II a) or (II b)

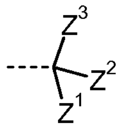

(II a)

$---Z^4$ (II b)

where
$Z^1$ and $Z^2$ either
independently of one another each stand for a monovalent hydrocarbon radical having 1 to 12 C atoms,
or
together stand for a divalent hydrocarbon radical having 4 to 20 C atoms which is part of an unsubstituted or substituted carbocyclic ring having 5 to 8, preferably 6, C atoms; and
$Z^3$ either
stands for a branched or unbranched alkyl, cycloalkyl, alkylene or cycloalkylene group,
or stands for a substituted or unsubstituted aryl or arylalkyl group,
or stands for a radical of the formula O-$R^2$ or

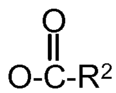 or 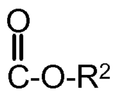

or

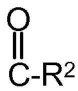 ,

where $R^2$ stands for an aryl, arylalkyl, cycloalkyl or alkyl group and is in each case substituted or unsubstituted, more particularly stands for an aryl, arylalkyl, cycloalkyl or alkyl group having 1 to 32 C atoms, which, if desired, contains ether oxygen atoms,
or stands for a radical of the formula (VI)

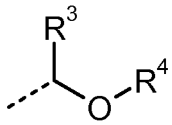

(VI)

where
$R^3$ stands for a hydrogen atom or for an alkyl, cycloalkyl or arylalkyl group, more particularly having 1 to 12 C atoms, preferably for a hydrogen atom, and
$R^4$ either
stands for a hydrocarbon radical having 1 to 30 C atoms, which, where appropriate, contains ether oxygen atoms,
or stands for a radical

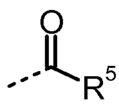

where $R^5$ stands for a hydrogen atom or for a hydrocarbon radical having 1 to 30, more particularly 11 to 30, C atoms;
$Z^4$ either
stands for a substituted or unsubstituted aryl or heteroaryl group which has a ring size of 5 to 8, preferably 6, atoms, or stands for

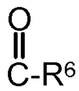 ,

where $R^6$
stands for a hydrogen atom or for an alkoxy group,
or stands for a substituted or unsubstituted alkenyl or arylalkenyl group having at least 6 C atoms.

5. Use according to any one of the preceding claims, **characterized in that** the aldehyde from which the radical Y derives has the formula (V a)

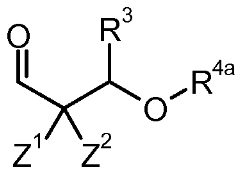 (V a)

where
$Z^1$ and $Z^2$ either
independently of one another each stand for a monovalent hydrocarbon radical having 1 to 12 C atoms,
or
together stand for a divalent hydrocarbon radical having 4 to 20 C atoms which is part of an unsubstituted or substituted carbocyclic ring having 5 to 8, preferably 6, C atoms;
$R^3$ stands for a hydrogen atom or for an alkyl, cycloalkyl or arylalkyl group, more particularly having 1 to 12 C atoms, preferably for a hydrogen atom; and
$R^{4a}$ stands for a hydrocarbon radical having 1 to 30 C atoms, more particularly 11 to 30 C atoms, which, where appropriate, contains ether oxygen atoms.

6. Use according to any one of Claims 1 to 4, **characterized in that** the aldehyde from which the radical Y derives has the formula (V b)

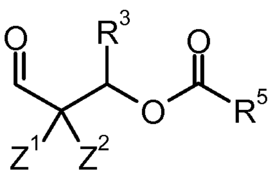 (V b)

where
$Z^1$ and $Z^2$ either
independently of one another each stand for a monovalent hydrocarbon radical having 1 to 12 C atoms,
or
together stand for a divalent hydrocarbon radical having 4 to 20 C atoms which is part of an unsubstituted or substituted carbocyclic ring having 5 to 8, preferably 6, C atoms;
$R^3$ stands for a hydrogen atom or for an alkyl, cycloalkyl or arylalkyl group, more particularly having 1 to 12 C atoms, preferably for a hydrogen atom; and
$R^5$ stands for a hydrogen atom or for a hydrocarbon radical having 1 to 30, more particularly 11 to 30, C atoms.

7. Use according to any one of the preceding claims, **characterized in that** the moisture-reactive polyurethane adhesive

comprises one or more isocyanate group-containing polyurethane polymers **P1** that is liquid at room temperature.

8. Use according to Claim 7, **characterized in that** the adhesive composition comprises two or more polyurethane polymers **P1,** preferably one of them being based on a polyol having a molecular weight below 2000 g/mol.

9. Use according to Claim 8, **characterized in that** the adhesive composition comprises a polyetherpolyol-based polyurethane polymer **P1** and a polycarbonatepolyol-based polyurethane polymer **P1.**

10. Use according to any one of Claims 7 to 9, **characterized in that** the adhesive composition further comprises at least one polyurethane polymer **P2** which is solid at room temperature and contains isocyanate groups.

11. Use according to Claim 10, **characterized in that** the polyurethane polymer **P2** which is solid at room temperature is prepared from polyesterpolyols and/or polycarbonatepolyols.

12. Use according to any one of Claims 7 to 11, **characterized in that** the fraction of the dialdimine of the formula (I) in the composition is chosen such that the ratio of the number of aldimino groups to the number of NCO groups in the composition is 0.5 - < 1, preferably at least 0.6 - 0.8, most preferably 0.65 - 0.75.

13. Use according to any one of the preceding claims, **characterized in that** the adhesive composition after 7 days' storage at room temperature and 50% relative humidity has a ratio of the shear modulus measured at -20°C to the shear modulus measured at 23°C of less than 1.7, more particularly less than 1.5, preferably less than 1.4, the shear moduli having been measured at the stated temperatures according to DIN 54 451.

14. Use according to Claim 13, **characterized in that** the adhesive composition after 7 days' storage at room temperature and 50% relative humidity has a shear modulus at 80°C, measured according to DIN 54 451, of more than 1 MPa, more particularly between 1 and 5 MPa.

15. Use according to Claim 13 or 14, **characterized in that characterized in that** the adhesive composition after 7 days' storage at room temperature and 50% relative humidity has a shear modulus at -20°C, measured according to DIN 54 451, of less than 6 MPA, preferably between 3 and 6 MPa, preferably between 4 and 6 mPa.

16. Use according to any one of the preceding claims, **characterized in that** the adhesive composition after 7 days' storage at room temperature and 50% relative humidity has a shear modulus at 23°C, measured according to DIN 54 451, of more than 3 MPa, more particularly between 3 and 6 MPa, preferably between 4 and 6 MPa, more preferably between 3.5 and 5.5 MPa.

17. Use according to any one of the preceding claims, **characterized in that** the adhesive composition after 7 days' storage at room temperature and 50% relative humidity has a shear modulus at 80°C, measured according to DIN 54 451, of more than 2, more particularly of more than 3 MPa, preferably between 3 and 5 MPa.

**Revendications**

1. Utilisation d'une di-aldimine de formule (I) pour réduire la dépendance thermique du module de poussée mesuré selon la norme DIN 54 451 des colles de polyuréthane réactives à l'humidité

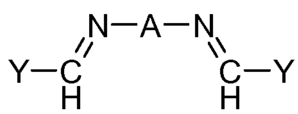

(I)

A représentant un radical hydrocarbure aliphatique, cycloaliphatique ou arylaliphatique divalent contenant 2 à 15 atomes de carbone, et Y le radical d'un aldéhyde après élimination d'un groupe O=CH.

2. Utilisation selon la revendication 1, **caractérisée en ce que** A représente une diamine de formule (III) après élimination des deux groupes amino,

$H_2N\text{-}A\text{-}NH_2$ (III)

et que cette diamine de formule (III) est sélectionnée dans le groupe constitué par l'éthylènediamine, la 1,3-propanediamine, la 1,4-butanediamine, la 1,5-pentanediamine, la 1,6-hexanediamine, la 1,8-octanediamine, la 1,10-décanediamine, la 1,12-dodécanediamine, le 1,3- et le 1,4-diaminocyclohexane, le bis(4-aminocyclohexyl)méthane, le 1,3- et le 1,4-bis(aminométhyl)-cyclohexane et également la 1,3-et la 1,4-xylylènediamine.

3. Utilisation selon la revendication 2, **caractérisée en ce que** la diamine de formule (III) est la 1,6-hexanediamine.

4. Utilisation selon l'une quelconque des revendications précédentes, **caractérisée en ce que** le radical Y est de formule (II a) ou (II b)

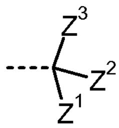

(II a)

$---Z^4$ (II b)

$Z^1$ et $Z^2$ représentant
indépendamment l'un de l'autre un radical hydrocarbure monovalent contenant 1 à 12 atomes de carbone,
ou
l'un et l'autre un radical hydrocarbure divalent contenant 4 à 20 atomes de carbone faisant partie d'un cycle carbocyclique substitué ou non substitué contenant 5 à 8 atomes de carbone, de préférence 6 atomes de carbone, et
$Z^3$ représentant
un groupe alkyle, cycloalkyle, alkylène ou cycloalkylène ramifié ou non ramifié,
ou un groupe aryle ou arylalkyle substitué ou non substitué,
ou un radical de formule $O\text{-}R^2$ ou

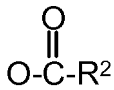 ou 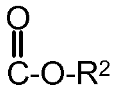

ou

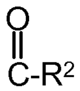 ,

$R^2$ représentant un groupe aryle, arylalkyle, cycloalkyle ou alkyle et étant dans chaque cas substitué ou non substitué, plus particulièrement un groupe aryle, arylalkyle, cycloalkyle ou alkyle contenant 1 à 32 atomes de carbone renfermant, au besoin, des atomes d'oxygène d'éther,
ou un radical de formule (VI)

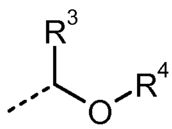

(VI)

$R^3$ représentant un atome d'hydrogène ou un groupe alkyle, cycloalkyle ou arylalkyle, contenant plus particulièrement 1 à 12 atomes de carbone, de préférence un atome d'hydrogène, et
$R^4$ représentant

un radical hydrocarbure contenant 1 à 30 atomes de carbone renfermant, le cas échéant, des atomes d'oxygène d'éther,
ou un radical

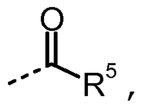

$R^5$ représentant un atome d'hydrogène ou un radical hydrocarbure contenant 1 à 30 atomes de carbone, plus particulièrement 11 à 30 atomes de carbone ;
$Z^4$ représentant
un groupe aryle ou hétéroaryle substitué ou non substitué dont le cycle contient 5 à 8 atomes, de préférence 6 atomes, ou

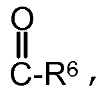

$R^6$ représentant un atome d'hydrogène ou un groupe alcoxy,
ou un groupe alcényle ou arylalcényle substitué ou non substitué contenant au moins 6 atomes de carbone.

5. Utilisation selon l'une quelconque des revendications précédentes, **caractérisée en ce que** l'aldéhyde dont provient le radical Y est de formule (Va)

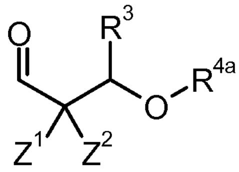

(Va)

$Z^1$ et $Z^2$ représentant
indépendamment l'un de l'autre un radical hydrocarbure monovalent contenant 1 à 12 atomes de carbone,
ou
l'un et l'autre un radical hydrocarbure divalent contenant 4 à 20 atomes de carbone faisant partie d'un cycle carbocyclique substitué ou non substitué contenant 5 à 8 atomes de carbone, de préférence 6 atomes de carbone ;
$R^3$ représentant un atome d'hydrogène ou un groupe alkyle, cycloalkyle ou arylalkyle, contenant plus particulièrement 1 à 12 atomes de carbone, de préférence un atome d'hydrogène ; et
$R^{4a}$ représentant un radical hydrocarbure contenant 1 à 30 atomes de carbone, plus particulièrement 11 à 30 atomes de carbone renfermant, le cas échéant, des atomes d'oxygène d'éther.

6. Utilisation selon l'une quelconque des revendications précédentes 1 à 4, **caractérisée en ce que** l'aldéhyde dont provient le radical Y est de formule (Vb)

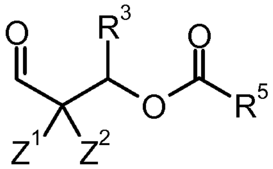

(Vb)

$Z^1$ et $Z^2$ représentant

indépendamment l'un de l'autre un radical hydrocarbure monovalent contenant 1 à 12 atomes de carbone, ou

l'un et l'autre un radical hydrocarbure divalent contenant 4 à 20 atomes de carbone faisant partie d'un cycle carbocyclique substitué ou non substitué contenant 5 à 8 atomes de carbone, de préférence 6 atomes de carbone ;

$R^3$ représentant un atome d'hydrogène ou un groupe alkyle, cycloalkyle ou arylalkyle, contenant plus particulièrement 1 à 12 atomes de carbone, de préférence un atome d'hydrogène ; et

$R^5$ représentant un atome d'hydrogène ou un radical hydrocarbure contenant 1 à 30 atomes de carbone, plus particulièrement 11 à 30 atomes de carbone.

**7.** Utilisation selon l'une quelconque des revendications précédentes, **caractérisée en ce que** la colle de polyuréthane réactive à l'humidité comprend un ou plusieurs polymères de polyuréthane **P1** contenant un groupe isocyanate qui est liquide à température ambiante.

**8.** Utilisation selon la revendication 7, **caractérisée en ce que** la composition de colle comprend au moins deux polymères de polyuréthane **P1,** l'un d'entre eux étant de préférence à base d'un polyol d'un poids moléculaire inférieur à 2 000 g/mol.

**9.** Utilisation selon la revendication 8, **caractérisée en ce que** la composition de colle comprend un polymère de polyuréthane **P1** à base de polyéther-polyol et un polymère de polyuréthane **P1** à base de polycarbonate-polyol.

**10.** Utilisation selon l'une quelconque des revendications 7 à 9, **caractérisée en ce que** la composition de colle comprend également au moins un polymère de polyuréthane **P2** qui est solide à température ambiante et qui contient des groupes isocyanate.

**11.** Utilisation selon la revendication 10, **caractérisée en ce que** le polymère de polyuréthane **P2** qui est solide à température ambiante est préparé à partir de polyesters-polyols et/ou de polycarbonates-polyols.

**12.** Utilisation selon l'une quelconque des revendications 7 à 11, **caractérisée en ce que** la fraction de la di-aldimine de formule (I) de la composition est sélectionnée de manière à ce que le rapport nombre de groupes aldimino sur nombre de groupes NCO dans la composition est compris entre 0,5 - < 1, de préférence entre au moins 0,6 - 0,8, de manière préférée entre toutes entre 0,65 - 0,75.

**13.** Utilisation selon l'une quelconque des revendications précédentes, **caractérisée en ce que** la composition de colle après 7 jours de conservation à température ambiante et 50 % d'humidité relative présente un rapport module de poussée mesuré à -20 °C sur module de poussée mesuré à 23 °C inférieur à 1,7, plus particulièrement inférieur à 1,5, de préférence inférieur à 1,4, les mesures des modules de poussée étant effectuées aux températures indiquées selon la norme DIN 54 451.

**14.** Utilisation selon la revendication 13, **caractérisée en ce que** la composition de colle après 7 jours de conservation à température ambiante et 50 % d'humidité relative présente un module de poussée à 80 °C, mesuré selon la norme DIN 54 451, supérieur à 1 MPa, plus particulièrement compris entre 1 et 5 MPa.

**15.** Utilisation selon la revendication 13 ou 14, **caractérisée en ce que caractérisée en ce que** la composition de colle après 7 jours de conservation à température ambiante et 50 % d'humidité relative présente un module de poussée à -20 °C, mesuré selon la norme DIN 54 451, inférieur à 6 MPa, de préférence compris entre 3 et 6 MPa, de préférence entre 4 et 6 MPa.

**16.** Utilisation selon l'une quelconque des revendications précédentes, **caractérisée en ce que** la composition de colle après 7 jours de conservation à température ambiante et 50 % d'humidité relative présente un module de poussée à 23 °C, mesuré selon la norme DIN 54 451, supérieur à 3 MPa, plus particulièrement compris entre 3 et 6 MPa, de préférence entre 4 et 6 MPa, de préférence entre 3,5 et 5,5 MPa.

**17.** Utilisation selon l'une quelconque des revendications précédentes, **caractérisée en ce que** la composition de colle après 7 jours de conservation à température ambiante et 50 % d'humidité relative présente un module de poussée à 80 °C, mesuré selon la norme DIN 54 451, supérieur à 2, plus particulièrement supérieur à 3 MPa, de préférence compris entre 3 et 5 MPa.